# EUROPÄISCHE PATENTSCHRIFT

(11) **EP 1 895 185 B1**
(45) Veröffentlichungstag und Bekanntmachung des Hinweises auf die Patenterteilung: **30.11.2011**
(21) Anmeldenummer: 07015841.5
(22) Anmeldetag: 11.08.2007
(51) Int. Cl.: F16F 9/04

(54) **Trennelement, insbesondere für ein Luftfeder-Dämpferelement**
Separating element, in particular for a damping element of a pneumatic spring
Elément de séparation, en particulier pour un élément amortisseur d'un ressort pneumatique

(30) Priorität: 04.09.2006 DE 102006041769
(43) Veröffentlichungstag der Anmeldung: 05.03.2008
(73) Patentinhaber: ZF Friedrichshafen AG, 88038 Friedrichshafen (DE)
(72) Erfinder: Förster, Andreas, 97422 Schweinfurt (DE)

(56) Entgegenhaltungen:
- EP-A2- 1 353 085
- DE-A1- 2 759 435
- DE-A1- 3 436 664
- DE-A1- 4 201 246

## Beschreibung

Die Erfindung betrifft ein Trennelement gemäß dem Oberbegriff von Patentanspruch 1.

Aus der DE 34 36 664 C2 ist ein Luftfeder-Dämpferelement bekannt, das zwei Arbeitsräume aufweist, die jeweils von einem Rollbalg verschlossen werden. Zwischen den beiden Rollbälgen bilden zwei Gehäuseteile, verbunden über jeweils einen umlaufenden Flansch ein Gesamtgehäuse. An dem Flansch stützt sich z. B. ein Fahrzeugaufbau ab. Einer der beiden Rollbälge ist an einem ersten Kolben fixiert, der wiederum mit einem Fahrzeugrad in Wirkverbindung stehen kann. Ein zweiter, am gegenüberliegenden Ende angeordneter Rollbalg ist über einen zweiten Kolben mit einer Verbindungsstange verbunden, die wiederum stirnseitig am ersten Kolben befestigt ist. Bei einer Relativbewegung des Flansches zum ersten Kolben rollen die beiden Bälge auf den beiden Kolben ab. Im Flanschbereich ist ein Trennelement angeordnet, die die beiden Arbeitsräume trennt. Wie aus der Fig. 4 der DE 34 36 664 C2 ersichtlich ist, enthält die Trennelement eine Dichtung und eine Drosselöffnung. Prinzipiell muss die Drosselöffnung nicht unbedingt innerhalb des Trennelements ausgeführt sein. Es wäre zwischen den beiden Arbeitsräumen auch eine externe Verbindung denkbar, die die Drosselöffnung enthält. Funktional wichtig ist eine definierte Dichtwirkung, da sonst bei einer gewünschten Dämpfkraftkennlinie des Luftfeder-Dämpferelements eine unzulässige Abweichung auftreten kann.

Aufgabe der vorliegenden Erfindung ist es, ein Trennelement zu schaffen, das eine geringe Reibung bezüglich einer inneren zylindrischen Kontaktfläche aufweist.

Erfindungsgemäß wird die Aufgabe dadurch gelöst, dass das Trennelement mindestens zwei geschichtete radial verformbare Scheibenelemente umfasst, die von einem radial äußeren Vorspannring in Richtung des Bauteils in der Durchgangsöffnung vorgespannt werden.

Der große Vorteil der Erfindung besteht darin, dass über den Vorspannring eine gezielte Vorspannkraft auf die inneren Scheibenelemente ausgeübt werden kann. Des Weiteren können die Scheibenelemente Form- und Lagetoleranzen ausgleichen.

In weiterer Ausgestaltung weist das Scheibenelement mindestens einen radial verlaufenden Schlitz auf. Über die Größe und Anzahl der Schlitze kann die Verformbarkeit des Scheibenelements dimensioniert werden.

Der radial verlaufende Schlitz kann auch mindestens einen in Umfangsrichtung verlaufenden Versatz aufweisen, um ein Labyrinth-Profil zu erzeugen, das eine nochmals gesteigerte Dichtwirkung erzielt.

Das Scheibenelement elastisch ist ausgeführt und besteht bevorzugt aus einem Kunststoff.

Im Hinblick auf eine insgesamt einfache Konstruktion liegen die Scheibenelemente direkt auf der Oberfläche des Bauteils in der Durchgangsöffnung an und üben die Dichtfunktion aus.

Gemäß einem Unteranspruch sind die Scheibenelemente in der Einbaulage so zueinander in Umfangsrichtung positioniert, dass der mindestens eine radiale Schlitz des mindestens einen Scheibenelements von dem mindestens einen anderen Scheibenelement in Axialrichtung abgedeckt wird.

Dazu können die beiden Scheibenelemente durch mindestens einen Positionierstift in Umfangsrichtung zueinander orientiert sein.

Alternativ sind die Scheibenelemente in Umfangsrichtung orientiert zu dem Vorspannring ausgerichtet.

Zur Vereinfachung der Montage wird für die orientierte Einbaulage der Scheibenelemente pro Scheibenelement mindestens ein radialer Positionierungsstift verwendet, der einen Formschluss zwischen dem Scheibenelement und dem Vorspannring bildet.

Man kann den Positionierstift als ein selbständiges Bauteil ausführen, montagefreundlicher ist jedoch die Variante, bei der der Positionierstift einteilig mit dem Scheibenelement ausgeführt ist.

Auch der Vorspannring ist über mindestens einen Schlitz radial elastisch.

Zur Begrenzung oder Vermeidung einer Leckage wird der mindestens eine Schlitz im Vorspannring im Endmontagezustand von den Scheibenelementen zumindest nahezu abgedeckt.

Gemäß einem weitern Unteranspruch wird das Trennelement außenrandseitig axial in einer Nut gehalten wird und die Scheibenelemente kommen axial an Nutseitenwänden der tragenden Nut zur Anlage.

Der Vorspannring weist axial maximal die Bauhöhe auf, wie die geschichteten Scheibenelemente. Es soll vermieden werden, dass bei ungünstigen Toleranzkombinationen der Bauhöhe der Scheibenelemente der Vorspannring tragend an einer Nutseitenwand zur Anlage kommt.

Anhand der folgenden Figurenbeschreibung soll die Erfindung näher erläutert werden.

Es zeigt:
- Fig. 1: Beispielhafte Einbausituation der Erfindung in einem Luftfeder-Dämpferelement
- Fig. 2 - 4: Verschiedene Ansichten des Trennelements als Einzelteil
- Fig. 5 - 6: Alternativvariante zur Ausführung nach den Fig. 2 - 4

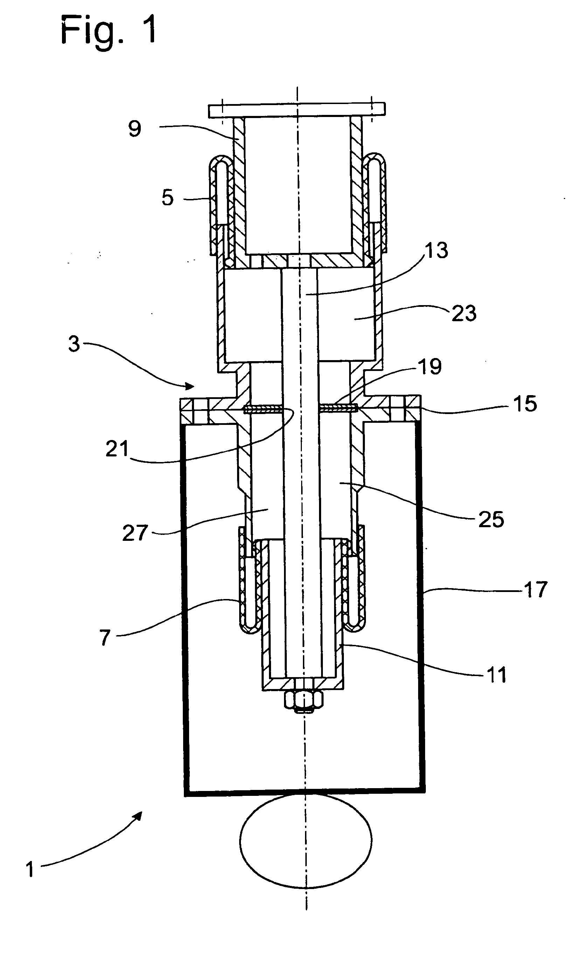

Die Fig. 1 zeigt ein Luftfeder-Dämpferelement 1, das ein zweiteiliges Gehäuse 3 aufweist, an dessen Enden jeweils ein Rollbalg 5; 7 gespannt ist. Der Rollbalg 5 ist an einem ersten Abrollkolben 9, der Rollbalg 7 an einem Abrollkolben 11 befestigt. Beide Abrollkolben 9; 11 sind über eine Stange 13 miteinander verbunden.

An einem äußeren Flansch 15 des Gehäuses 3 greift eine Anbindung 17 für ein nicht dargestelltes Fahrzeugrad an. Der Kolben 9 kann z. B. an einem ebenfalls nicht gezeigten Fahrzeugaufbau befestigt sein. Innerhalb einer Teilungsfuge des Flansches 15 ist ein Trennelement 19 angeordnet, das eine Durchgangsöffnung 21 für die Stange 13 aufweist. Dieses Trennelement begrenzt einen Arbeitsraum 23 zu einem Arbeitsraum 25 innerhalb des Gehäuses.

Bei einer Relativbewegung des Abrollkolbens 9 zur Anbindung 17 verändern sich die Volumeninhalte der beiden Arbeitsräume 23; 25 gegensinnig. Auch die Stange 13 führt zum Trennelement 19 eine Hubbewegung aus. Die auftretenden Volumenveränderungen der Arbeitsräume 23; 25 werden als Feder- und Dämpffunktion genutzt, wobei zwischen den Arbeitsräumen mindestens eine nicht dargestellte Drosselöffnung besteht.

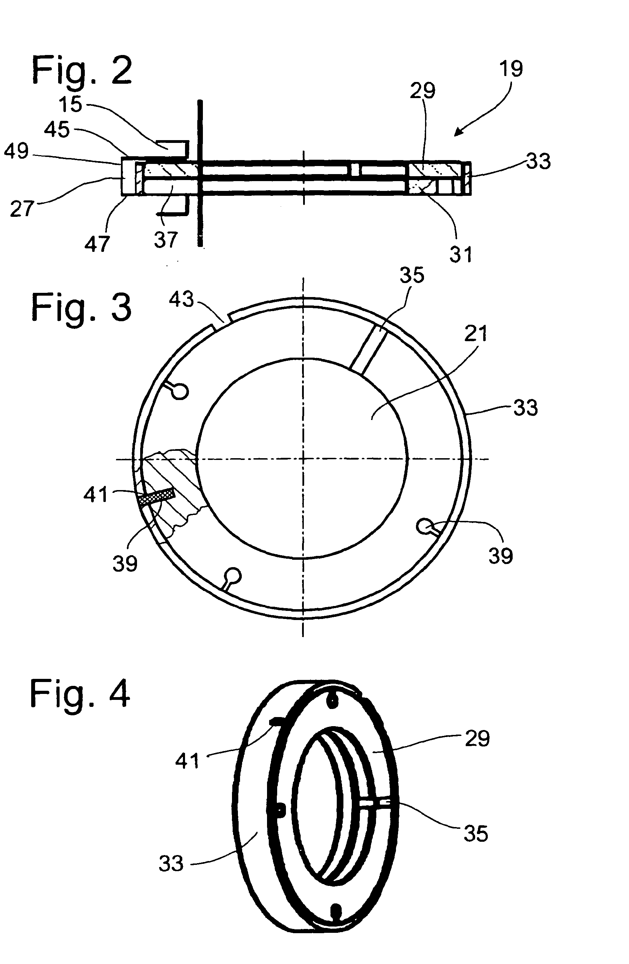

Die Fig. 2 zeigt das Trennelement 19 als Baueinheit in einer vereinfacht dargestellten Nut 27 des Flansches 15. Das Trennelement umfasst zwei geschichtete und radial verformbare Scheibenelemente 29; 31, die von einem äußeren Vorspannring 33 in Richtung der Stange 13 in der Durchgangsöffnung 21 vorgespannt werden. Wie aus der Zusammenschau mit der Fig. 3 ersichtlich ist, weisen die Scheibenelemente mindestens einen radialen Schlitz 35; 37 auf. Zusätzlich können noch weitere radial begrenzte Schlitze 39 ausgeführt sein, die die Verformbarkeit der Scheibenelemente erleichtern sollen.

Die Scheibenelemente 29; 31 verfügen über eine Eigenelastizität und bestehen bevorzugt aus einem Kunststoff. Sie liegen direkt an der Oberfläche der Stange 13 an und üben eine Dichtfunktion zur Stange aus. Zur Vermeidung eines axialen Durchtrittsquerschnitts sind die Scheibenelemente 29; 31 in der Einbaulage in Umfangsrichtung so zueinander positioniert, dass der mindestens eine radiale Schlitz 35; 37 von dem anderen Scheibenelement in Axialrichtung abgedeckt wird.

Als Bezugsbauteil dient der Vorspannring, zu dem die Scheibenelemente in Umfangsrichtung orientiert ausgerichtet sind. Für die orientierte Einbaulage der Scheibenelemente wird pro Scheibenelement mindestens ein Positionierstift 39 verwendet, der in eine Öffnung 41 des Vorspannrings 33 eingreift und einen Formschluss zwischen dem jeweiligen Scheibenelement und dem Vorspannring bildet (s. auch Fig. 4). Die Größe der Öffnung 41 zum Positionierstift 39 berücksichtigt eine radiale Vorspannbewegung des Scheibenelements zum Vorspannring. In der Fig. 2 ist der Positionierstift zur besseren Erkennbarkeit als separates Bauteil dargestellt. Bei einer bevorzugten Variante ist der Positionierstift 39 mit dem Scheibenelement 29; 31 einteilig ausgeführt.

Die Fig. 3 zeigt des Weiteren, dass auch der Vorspannring 33 über mindestens einen Schlitz 43 radial elastisch ist, wobei der Schlitz 43 in Richtung der Durchgangsöffnung 21 von den Mantelflächen der Scheibenelemente 29; 31 zumindest nahezu abgedeckt werden.

In der Einbaulage des Tennelements in der Nut 27 kommen die Scheibenelemente 29; 31 in Abhängigkeit der Bewegungsrichtung der Stange 13 an Nutseitenwänden 45; 47 zur Anlage und bilden damit einen Dichtspalt in Richtung der Stange. Der Vorspannring 33 weist maximal die Bauhöhe der geschichteten Scheibenelemente 29; 31 auf. Der maximale Durchtrittsquerschnitt bestimmt sich aus dem Höhenunterschied der maximalen Bauhöhe der Scheibenelement und der minimalen Höhe des Vorspannelements multipliziert mit der Schlitzbreite in einem der Scheibenelemente. Versuche habe jedoch ergeben, dass dieser maximal auftretende Leckagequerschnitt für die Funktion des Luftfeder-Dämpferelements vernachlässigbar ist.

Es liegt ein gewolltes Spiel zwischen dem Vorspannring und einer Nutgrundfläche 49 vor, so dass ein gewisser radialer Versatz der Stange 13 zum Gehäuse 3 kompensiert werden kann.

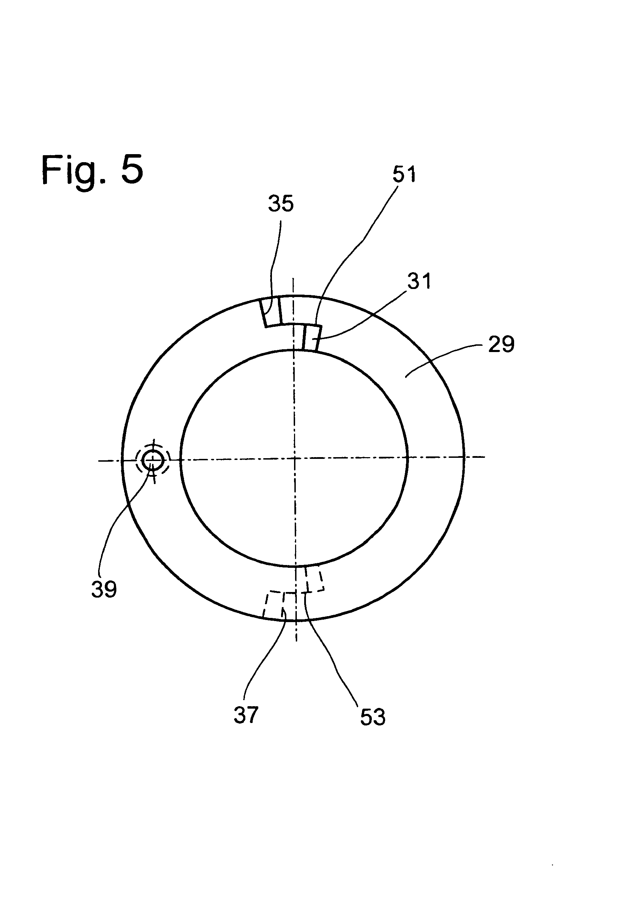

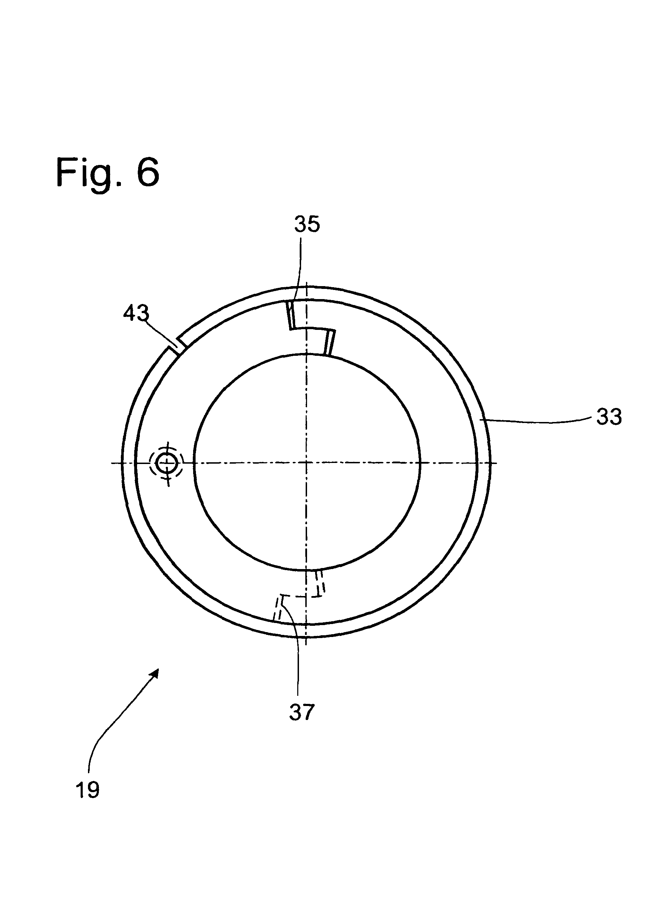

Die Fig. 5 und 6 zeigen geschichtete Scheibenelemente 29; 31, die einen radialen Schlitz mit einem in Umfangsrichtung verlaufenden Versatz 51; 53 aufweisen. Wie bei den Varianten nach Fig. 2 bis 4 werden die Schlitze 35; 37 in dem einen Scheibenelement von dem anderen Scheibenelement axial abgedeckt. Die beiden Scheibenelemente verfügen über eine axiale Durchgangsöffnung für den Positionierstift 39. Eine Drehorientierung der Scheibenelemente zum Schlitz 43 des Vorspannrings 33 ist nicht notwendig, da der Versatz 51; 53 in beiden Schlitzen 35; 37 der Scheibenelemente dafür sorgt, dass die dadurch gebildete Dichtstelle eine radiale Leckageverbindung verhindert. In Axialrichtung spielt der Schlitz 43 im Vorspannring 39 bezüglich der Dichtwirkung keine Rolle, da die Scheibenelemente 29; 31, wie in Fig. 2 gezeigt, an den Nutseitenflächen 45; 47 anliegen und die Dichtfunktion übernehmen. Aus der Zusammenschau der Fig. 5 und 6 wird deutlich, dass der Vorspannring 43 die Schlitze 35; 37 in den Scheibenelemente verschließt, wobei die überlappenden Enden an dem Konturenverlauf des Versatzes in Berührung stehen.

## Patentansprüche

1. Trennelement, scheibenförmig mit einer Durchgangsöffnung, wobei die Durchgangsöffnung eine Dichtfläche zu einer zylindrischen Oberfläche eines die Durchgangsöffnung aufnehmenden Bauteils aufweist,
**dadurch gekennzeichnet,**
**dass** das Trennelement (19) mindestens zwei geschichtete, radial verformbare Scheibenelemente (29; 31) umfasst, die von einem radial äußeren Vorspannring (33) in Richtung des Bauteils (13) in der Durchgangsöffnung (21) vorgespannt werden.

2. Trennelement nach Anspruch 1,
**dadurch gekennzeichnet,**
**dass** die Scheibenetemente (29; 31) mindestens einen radial verlaufenden Schlitz (35; 37) aufweisen.

3. Trennelement nach Anspruch 2.
**dadurch gekennzeichnet,**
**dass** der radial verlaufende Schlitz (35; 37) mindestens einen in Umfangsrichtung verlaufenden Versatz (51; 53) aufweist.

4. Trennelement nach Anspruch 1,
**dadurch gekennzeichnet**,
das die Scheibenelemente (29; 31) elastisch ausgeführt sind.

5. Trennelement nach Anspruch 1,
**dadurch gekennzeichnet,**
**dass** die Scheibenelemente (29; 31) direkt auf der Oberfläche des Bauteils (13) in der Durchgangsöffnung (21) anliegen und die Dichtfunktion ausüben.

6. Trennelement nach Anspruch 2,
**dadurch gekennzeichnet,**
**dass** die Scheibenelemente (29; 31) in der Einbaulage so zueinander in Umfangsrichtung positioniert sind, dass der mindestens eine radiale Schlitz (35; 37) des mindestens einen Scheibenelements von dem mindestens einen anderen Scheibenelement in Axialrichtung abgedeckt wird.

7. Trennelement nach Anspruch 6;
**dadurch gekennzeichnet,**
**dass** die beiden Scheibenelemente (29; 31) durch mindestens einen Positionierstift (39) in Umfangsrichtung zueinander orientiert sind.

8. Trennelement nach Anspruch 7,
**dadurch gekennzeichnet,**
**dass** die Scheibenelemente (29; 31) in Umfangsrichtung orientiert zu dem Vorspannring (33) ausgerichtet sind.

9. Trennelement nach Anspruch 8,
**dadurch gekennzeichnet,**
**dass** für die orientierte Einbaulage der Scheibenelemente (29; 31) pro Scheibenelement mindestens ein radialer Positionierungsstift (39) verwendet wird, der einen Formschluss zwischen dem Scheibenelement (29; 31) und dem Vorspannring (33) bildet.

10. Trennelement nach Anspruch 9,
**dadurch gekennzeichnet,**
**dass** der Positionierstift (37) einteilig mit dem Scheibenelement (29; 31) ausgeführt ist.

11. Trennelement nach Anspruch 1,
**dadurch gekennzeichnet,**
**dass** der Vorspannring (39) über mindestens einen Schlitz (43) radial elastisch ist.

12. Trennelement nach Anspruch 11,
**dadurch gekennzeichnet,**
**dass** der mindestens eine Schlitz (43) im Vorspannring (33) im Endmontagezustand von den Scheibenelementen (29; 31) zumindest nahezu abgedeckt wird.

13. Trennelement nach Anspruch 1,
**dadurch gekennzeichnet,**
**dass** das Trennelement (19) außenrandseitig axial in einer Nut (27) gehalten wird und die Scheibenelemente (29; 31) axial an Nutseitenwänden (45; 47) der tragenden Nut (27) zur Anlage kommen.

14. Trennelement nach Anspruch 1,
**dadurch gekennzeichnet,**
**dass** der Vorspannring (33) axial maximal die Bauhöhe aufweist, wie die geschichteten Scheibenelemente (29; 31).

## Claims

1. Disc-shaped separating element with a through-hole, wherein the through-hole has a sealing surface with respect to a cylindrical surface of a component occupying the through-hole, **characterized in that** the separating element (19) has at least two laminated, radially deformable disc elements (29; 31), which are preloaded in the direction of the component (13) in the through-hole (21) by a radially outer preloading ring (33).

2. Separating element according to Claim 1, **characterized in that** the disc elements (29; 31) have at least one radially extending slot (35; 37).

3. Separating element according to Claim 2, **characterized in that** the radially extending slot (35; 37) has at least one offset (51; 53) extending in the circumferential direction.

4. Separating element according to Claim 1, **characterized in that** the disc elements (29; 31) are embodied in such a way as to be flexible.

5. Separating element according to Claim 1, **characterized in that** the disc elements (29; 31) rest directly on the surface of the component (13) in the through-hole (21) and perform the sealing function.

6. Separating element according to Claim 2, **characterized in that**, in the installed position, the disc elements (29; 31) are positioned in such a way relative to one another in the circumferential direction that the at least one radial slot (35; 37) in the at least one disc element is covered by the at least one other disc element in the axial direction.

7. Separating element according to Claim 6, **characterized in that** the two disc elements (29; 31) are oriented relative to one another in the circumferential direction by at least one positioning pin (39).

8. Separating element according to Claim 7, **characterized in that** the disc elements (29; 31) are aligned so as to be oriented in the circumferential direction relative to the preloading ring (33).

9. Separating element according to Claim 8, **characterized in that** at least one radial positioning pin (39) per disc element is used for the oriented installed position of the disc elements (29; 31), said pin forming a positive-locking connection between the disc element (29; 31) and the preloading ring (33).

10. Separating element according to Claim 9, **characterized in that** the positioning pin (37) is embodied in one piece with the disc element (29; 31).

11. Separating element according to Claim 1, **characterized in that** the preloading ring (39) is radially flexible by virtue of at least one slot (43).

12. Separating element according to Claim 11, **characterized in that** the at least one slot (43) in the preloading ring (33) is at least almost covered by the disc elements (29; 31) in the final assembly condition.

13. Separating element according to Claim 1, **characterized in that** the separating element (19) is held axially in a groove (27) at the outer rim, and the disc elements (29; 31) come to rest axially against groove side walls (45; 47) of the supporting groove (27).

14. Separating element according to Claim 1, **characterized in that** the overall height of the preloading ring (33) in the axial direction is no more than that of the laminated disc elements (29; 31).

## Revendications

1. Elément de séparation en forme de disque avec une ouverture de passage, l'ouverture de passage présentant une surface d'étanchéité par rapport à une surface cylindrique d'un composant recevant l'ouverture de passage,
**caractérisé en ce que**
l'élément de séparation (19) comprend au moins deux éléments de disques stratifiés (29 ; 31) radialement déformables, qui sont précontraints dans l'ouverture de passage (21) dans la direction du composant (13) par une bague de précontrainte radialement extérieure (33).

2. Elément de séparation selon la revendication 1,
**caractérisé en ce que**
les éléments de disques (29 ; 31) présentent au moins une fente (35 ; 37) s'étendant radialement.

3. Elément de séparation selon la revendication 2,
**caractérisé en ce que**
la fente s'étendant radialement (35 ; 37) présente au moins un décalage (51 ; 53) s'étendant dans la direction périphérique.

4. Elément de séparation selon la revendication 1,
**caractérisé en ce que**
les éléments de disques (29 ; 31) sont réalisés sous forme élastique.

5. Elément de séparation selon la revendication 1,
**caractérisé en ce que**
les éléments de disques (29 ; 31) s'appliquent directement sur la surface du composant (13) dans l'ouverture de passage (21) et exercent la fonction d'étanchéité.

6. Elément de séparation selon la revendication 2,
**caractérisé en ce que**
les éléments de disques (29 ; 31) sont positionnés dans la position d'installation l'un par rapport à l'autre dans la direction périphérique de telle sorte que l'au moins une fente radiale (35 ; 37) de l'au moins un élément de disque soit recouverte par l'au moins un autre élément de disque dans la direction axiale.

7. Elément de séparation selon la revendication 6,
**caractérisé en ce que**
les deux éléments de disques (29 ; 31) sont orientés l'un par rapport à l'autre dans la direction périphérique par au moins une goupille de positionnement (39).

8. Elément de séparation selon la revendication 7,
**caractérisé en ce que**
les éléments de disques (29 ; 31) sont orientés vers la bague de précontrainte (33) de manière orientée dans la direction périphérique.

9. Elément de séparation selon la revendication 8,
**caractérisé en ce**
**qu'**au moins une goupille de positionnement radiale (39) est utilisée pour chaque élément de disque pour la position d'installation orientée des éléments de disques (29 ; 31), laquelle goupille de positionnement forme un engagement par correspondance géométrique entre l'élément de disque (29 ; 31) et la bague de précontrainte (33).

10. Elément de séparation selon la revendication 9,
**caractérisé en ce que**
la goupille de positionnement (37) est réalisée d'une seule pièce avec l'élément de disque (29 ; 31).

11. Elément de séparation selon la revendication 1,
**caractérisé en ce que**
la bague de précontrainte (33) est radialement élastique au moyen d'au moins une fente (43).

12. Elément de séparation selon la revendication 11,
**caractérisé en ce que**
l'au moins une fente (43) dans la bague de précontrainte (33) est au moins pratiquement recouverte dans l'état de montage final par les éléments de disques (29 ; 31).

13. Elément de séparation selon la revendication 1,
**caractérisé en ce que**
l'élément de séparation (19) est maintenu axialement du côté du bord extérieur dans une rainure (27), et les éléments de disques (29 ; 31) viennent en appui axialement contre des parois latérales de rainure (45 ; 47) de la rainure portante (27).

14. Elément de séparation selon la revendication 1,
**caractérisé en ce que**
la bague de précontrainte (33) présente axialement au maximum la hauteur de construction des éléments de disques stratifiés (29 ; 31).
